# FASCICULE DE BREVET EUROPEEN

(11) **EP 3 703 836 B1**
(45) Date de publication et mention de la délivrance du brevet: **17.11.2021**
(21) Numéro de dépôt: 18811264.3
(22) Date de dépôt: 03.12.2018
(51) Int. Cl.: G10K 15/04, A63H 5/00, A01K 15/02

(54) **PROCÉDÉ DE FABRICATION D'UN OBJET MUSICAL ET OBJET MUSICAL OBTENU**
VERFAHREN ZUR HERSTELLUNG EINES MUSIKINSTRUMENTS UND SO ERHALTENES MUSIKINSTRUMENT
METHOD FOR PRODUCING A MUSICAL INSTRUMENT AND MUSICAL INSTRUMENT OBTAINED THEREBY

(30) Priorité: 04.12.2017 FR 1761581
(43) Date de publication de la demande: 09.09.2020
(73) Titulaire: Sophie La Girafe, 74150 Rumilly (FR)
(72) Inventeur: ON, Bao Han, 74150 Rumilly (FR)
(74) Mandataire: Cabinet Laurent & Charras
(86) Numéro de dépôt international: PCT/EP2018/083371
(87) Numéro de publication internationale: WO 2019/110520

(56) Documents cités:
- FR-A- 587 841
- US-A1- 2012 067 294
- US-A1- 2012 270 467

## Description

### Domaine technique :

La présente invention concerne un procédé de fabrication d'un objet musical, ledit objet musical comportant un corps creux et compressible, réalisé en un matériau souple et élastique, délimitant une cavité intérieure, une paroi intérieure disposée à l'intérieur dudit corps pour diviser ladite cavité intérieure en deux chambres, et un insert musical monté au travers de ladite paroi intérieure pour mettre en communication lesdites chambres et agencé pour émettre un son lorsqu'il est traversé par un flux d'air, ledit flux d'air étant généré par une pression mécanique exercée sur ledit corps au droit d'une des chambres, procédé dans lequel l'on réalise le corps dudit objet musical selon une technique de moulage en matière élastomère mise en forme dans un moule de fabrication creux pourvu d'un évent, le volume intérieur dudit moule correspondant à l'empreinte tridimensionnelle dudit corps.

L'invention concerne également un objet musical obtenu selon le procédé de fabrication mentionné ci-dessus.

### Technique antérieure :

Les objets musicaux auxquels s'applique l'invention concernent à titre d'exemples non limitatifs des petits instruments à vent tels que des sifflets utilisés pour la musique, le jeu, le secours, la signalisation, l'alerte, mais aussi des jouets pour enfants et nourrissons, des jouets pour animaux, ainsi que tout autre objet couineur ou siffleur, qui a la particularité d'émettre un son lorsqu'on le compresse et/ou lorsqu'on le mordille. Ces objets sont traditionnellement réalisés par moulage dans une matière élastique, telle qu'un caoutchouc naturel ou synthétique, ou toute autre matière techniquement équivalente, c'est-à-dire ayant des propriétés élastiques permettant à l'objet de reprendre sa forme initiale après suppression de la sollicitation de compression. De plus et selon la destination de l'objet, la matière utilisée doit répondre à des normes sanitaires strictes de non toxicité, notamment au contact de la salive de l'enfant. Dans ce cas, on privilégiera des matières naturelles telles que le latex, sans que cet exemple ne soit limitatif.

L'insert musical comporte généralement un petit instrument à vent à biseau, à lame vibrante, ou une combinaison des deux, agencé pour émettre un son par étranglement ou vibration au passage d'un flux d'air sous pression provoqué soit par le souffle de la bouche, soit par l'air chassé du volume intérieur de l'objet vers l'extérieur, lorsque le corps du jouet est comprimé par une pression mécanique.

L'insert musical comporte en outre une gaine à musique, qui peut être réalisée par injection dans une matière identique ou similaire à celle dudit objet, permettant à la fois la mise en place et le fonctionnement de l'insert musical à l'intérieur de l'objet. D'une manière générale, l'insert musical contenu dans ces objets est ajouté après la fabrication dudit objet lors d'une étape de reprise manuelle et est introduit par un trou d'évent formé dans une paroi du corps de l'objet lors de l'étape de moulage. Ainsi, l'insert musical est monté dans ce trou d'évent de telle manière qu'il communique d'une part avec le volume intérieur dudit objet et d'autre part avec l'environnement extérieur dudit objet pour créer un échange gazeux entre ces deux milieux dès lors que l'utilisateur exerce une pression sur le corps dudit objet pour le comprimer et relâche la pression sur ledit corps pour que l'objet retrouve sa forme initiale. A chaque sollicitation dudit objet, l'insert musical émet un son au passage du flux d'air dans un sens de l'intérieur de l'objet vers l'extérieur lorsque l'objet est sollicité en compression et/ou dans l'autre sens de l'extérieur de l'objet vers l'intérieur lorsque la sollicitation sur ledit objet est supprimée.

Le fonctionnement de ces objets musicaux implique nécessairement un risque de contamination dudit objet, et par voie de conséquence de l'utilisateur dudit objet, par des contaminants extérieurs pouvant provenir aussi bien de l'utilisateur que de l'environnement extérieur. Il est par conséquent compliqué, voire impossible de nettoyer et de désinfecter correctement l'objet musical pour éviter toute contamination croisée.

Les publications FR 2 793 152 A1, WO 2012/158742 A1 et WO 2017/045166 A1 décrivent respectivement un sifflet utilisable sans la bouche, un sifflet intégré dans un jouet, et un sifflet étanche à l'eau, nécessitant chacun obligatoirement un orifice ouvert sur l'environnement extérieur.

Les publications EP 2 446 737 A2, EP 2 446 738 A2 et US 2012/0067294 A1 décrivent un jouet pour animaux comportant entre autres un élément couineur communicant également avec l'environnement extérieur via un orifice, mais agencé de telle sorte que l'animal ne puisse pas y accéder et le détériorer.

Enfin, la publication US 2012/270467 A1 propose un jouet musical conçu pour la sécurité de l'enfant, dans lequel l'élément musical est monté dans un support, lequel est rendu solidaire du corps par collage dans un orifice formé dans le corps du jouet. Une des variantes illustrée très schématiquement est particulièrement sécurisée puisqu'elle empêche un accès accidentel à l'élément musical. Elle comporte un corps fermé, à l'intérieur duquel un élément musical est monté sur une paroi intérieure, qui sépare la chambre intérieure en deux cavités, et permet la création d'un son en sollicitant le corps au droit d'une des cavités. Ainsi, cette solution pourrait éviter les risques de contamination évoqués, mais sa réalisation industrielle n'est pas décrite.

Il n'existe donc pas à l'heure actuelle de solution réalisable industriellement permettant d'éviter le risque de contamination évoqué, tout en répondant aux exigences en termes de sécurité enfant.

### Exposé de l'invention :

La présente invention vise à pallier ces inconvénients en proposant un objet musical dit « propre » permettant d'éviter tout risque de contamination dudit objet par des contaminants extérieurs pouvant provenir aussi bien de l'utilisateur que de l'air ambiant et de ce fait tout risque de contamination croisée lorsque ledit objet musical est échangé entre plusieurs utilisateurs, de simplifier le nettoyage et la désinfection dudit objet en permettant un nettoyage par immersion, ou par simple contact avec une solution lavante, et de simplifier sensiblement le procédé industriel pour la fabrication dudit objet.

Dans ce but, l'invention concerne un procédé de fabrication du genre indiqué en préambule, caractérisé en ce que l'on fabrique séparément ladite paroi intérieure pourvue d'un orifice traversant agencé pour recevoir et maintenir en position ledit insert musical, en ce que, préalablement à l'étape de moulage dudit corps, l'on ajoute dans ledit moule de fabrication ladite paroi intérieure de telle manière que son pourtour soit surmoulé par ledit corps lors de l'étape de moulage, en ce que, après l'opération de moulage dudit corps, l'on introduit ledit insert musical dans ledit corps par le trou d'évent laissé dans la paroi extérieure dudit corps par l'évent dudit moule de fabrication, pour l'emboiter dans la paroi intérieure au travers dudit orifice traversant et simultanément fermer hermétiquement ledit orifice traversant, et en ce que, après montage de l'insert musical dans ledit corps, l'on ferme ledit trou d'évent par un bouchon pour l'obturer de manière étanche et fermer de manière hermétique ladite cavité intérieure, de sorte que ledit insert musical est disposé à l'intérieur dudit corps, entre les deux chambres afin de ne communiquer qu'avec elles, sans aucune communication avec l'environnement extérieur dudit objet musical.

De manière préférentielle, l'on remplit ladite cavité intérieure d'un volume d'air total déterminé et constant en tenant compte de l'élasticité dudit matériau constituant ledit corps et de la forme tridimensionnelle dudit corps pour autoriser un déplacement d'air entre les deux chambres lorsqu'une pression mécanique est exercée sur ledit corps au droit d'une des chambres et ainsi autoriser la création d'un son à chaque sollicitation mécanique dudit objet.

Dans une forme préférée de l'invention, l'on utilise comme technique de moulage une technique de rotomoulage.

De manière préférentielle, l'on utilise pour la paroi intérieure et le corps dudit objet musical une matière élastomère similaire, identique ou compatible, permettant une fusion entre les deux matières lors de l'opération de moulage, cette matière élastomère pouvant être choisie parmi les caoutchoucs naturels, les caoutchoucs synthétiques, les thermoplastiques élastomères.

Avantageusement, l'on prévoit sur ledit insert musical une zone de montage complémentaire à l'orifice traversant prévu dans ladite paroi intérieure et agencée pour fermer hermétiquement ledit orifice traversant. L'on peut notamment réaliser ladite zone de montage sous la forme d'une gorge agencée pour recevoir ledit orifice traversant, et de deux lèvres disposées de part et d'autre de ladite gorge, agencées pour se plaquer sur les faces opposées de ladite paroi intérieure, maintenir ledit insert musical en position de montage par rapport à ladite paroi intérieure et fermer hermétiquement ledit orifice traversant.

Dans ce but également, l'invention concerne un objet musical du genre indiqué en préambule, caractérisé en ce que ladite paroi intérieure a son pourtour surmoulé par ledit corps et comporte un orifice traversant agencé pour recevoir et maintenir en position ledit insert musical, en ce que ledit insert musical est agencé pour fermer hermétiquement ledit orifice traversant, et en ce que ledit corps comporte un trou d'évent fermé hermétiquement par un bouchon de sorte que ledit insert musical est disposé à l'intérieur dudit corps, entre les deux chambres afin de ne communiquer qu'avec elles, sans aucune communication avec l'environnement extérieur dudit objet musical.

Dans une forme avantageuse de l'invention, ladite cavité intérieure est remplie d'un volume d'air total déterminé et constant en tenant compte de l'élasticité dudit matériau constituant ledit corps et de la forme tridimensionnelle dudit corps pour autoriser un déplacement d'air entre les deux chambres lorsqu'une pression mécanique est exercée sur ledit corps au droit d'une des chambres et ainsi autoriser la création d'un son à chaque sollicitation mécanique dudit objet.

Dans la forme préférée de l'invention, ledit insert musical comporte une zone de montage complémentaire à l'orifice traversant prévu dans ladite paroi intérieure et agencée pour fermer hermétiquement ledit orifice.

Ladite zone de montage peut comporter une gorge agencée pour recevoir ledit orifice traversant, et deux lèvres disposées de part et d'autre de ladite gorge et agencées pour se plaquer sur les faces opposées de ladite paroi intérieure, maintenir ledit insert musical en position de montage par rapport à ladite paroi intérieure et fermer hermétiquement ledit orifice traversant.

### Description sommaire des dessins :

La présente invention et ses avantages apparaîtront mieux dans la description suivante d'un mode de réalisation donné à titre d'exemple non limitatif, en référence aux dessins annexés, dans lesquels:
- la figure 1 est une vue éclatée d'un objet selon l'invention dans une première étape de fabrication, montrant l'insertion d'une paroi intérieure dans un corps creux dudit objet lors d'une opération de moulage,
- la figure 2 est une vue éclatée de l'objet de la figure 1 une deuxième étape de fabrication, montrant le montage d'un insert musical dans le corps de l'objet obtenu par moulage,
- la figure 3 est une vue en coupe axiale de l'objet de la figure 2,
- la figure 4 est une vue éclatée de l'objet de la figure 2 dans une troisième étape de fabrication, montrant le montage d'un bouchon pour fermer de manière étanche le corps dudit objet,
- la figure 5 est une vue en coupe axiale de l'objet musical selon l'invention obtenu après fabrication, montrant le bouchon assemblé au corps dudit objet et le volume d'air contenu dans ledit corps,
- la figure 6 est une vue en coupe transversale selon l'axe VI-VI à travers la paroi de séparation de l'objet musical de la figure 5, et
- la figure 7 est une vue similaire à la figure 5 montrant ledit objet musical en fonctionnement, une partie du corps dudit objet musical étant comprimée et en dépression et l'autre partie étant expansée et en surpression.

### Illustrations de l'invention et meilleure manière de la réaliser :

En référence aux figures, l'invention concerne un objet musical 10 qui peut avoir plusieurs destinations, comme celles énumérées dans la description de l'état de la technique, sans que cette liste ne soit limitative. L'objet musical 10 est illustré dans les figures sous une forme parallélépipédique simplifiée au maximum, mais peut bien entendu présenter toute autre forme tridimensionnelle, géométrique ou non, fantaisiste ou non, représentant une figurine ou non, cette forme étant définie et choisie en fonction de la destination dudit objet. L'objet musical 10 comporte dans tous les cas un corps 11, creux et compressible, délimitant au moins une cavité intérieure 12 fermée. Le corps 11 dudit objet musical 10 est avantageusement réalisé dans une matière élastomère, telle qu'un caoutchouc naturel ou synthétique, ou toute autre matière techniquement équivalente, c'est-à-dire ayant des propriétés élastiques permettant à l'objet de reprendre sa forme initiale après suppression d'une sollicitation de compression. Il est de préférence fabriqué en une seule pièce, et comporte une paroi extérieure 14 continue, obtenue par moulage comme expliqué plus loin. Bien entendu et selon la complexité de la forme tridimensionnelle dudit objet, il peut être fabriqué en deux ou plusieurs pièces assemblées le long d'un ou de plusieurs plans de joint vissés, soudés, collés, ou assemblés par tout autre moyen technique connu, pour être démontable ou indémontable, en fonction du cahier des charges dudit objet.

L'objet musical 10 comporte avantageusement une paroi intérieure 15 qui a pour fonction de diviser la cavité intérieure 12 en deux chambres 12a, 12b hermétiques et de porter un insert musical 20 pour qu'il soit disposé à l'intérieur dudit corps 11, entre les deux chambres 12a, 12b afin de ne communiquer qu'avec elles, sans aucune communication avec l'environnement extérieur dudit objet. La paroi intérieure 15 est de préférence positionnée dans une zone médiane dudit objet musical 10 pour diviser la cavité intérieure 12 en deux chambres 12a, 12b sensiblement d'égal volume. Ce mode de réalisation est préféré mais n'est pas le seul car les deux chambres pourraient ne pas avoir le même volume sans affecter le fonctionnement dudit insert musical 20. Il convient dans ce cas que la chambre ayant le volume le plus faible ait un volume suffisant pour permettre un transfert de flux d'air suffisant pour permettre à l'insert musical 20 d'émettre un son. A contrario, si le volume de la chambre la plus faible n'est pas suffisant, le déplacement d'air ne pourra pas générer de son. En effet, le volume de ces chambres 12a, 12b définit le flux d'air qui va traverser l'insert musical 20 pour créer un son à chaque sollicitation dudit objet. Pour ce faire, le volume d'air total des deux chambres 12a, 12b de l'objet musical 10 à l'état initial, c'est-à-dire sans sollicitation mécanique, doit être déterminé en fonction de l'élasticité permise par la matière constituant le corps 11 dudit objet et de la forme tridimensionnelle dudit objet musical 10. Cela signifie qu'il ne faut pas mettre les chambres 12a, 12b en surpression à l'état initial dudit objet musical 10, car si le volume d'air total est trop important jusqu'à saturer les chambres, il n'y aura aucune possibilité de déplacement d'air entre les deux chambres 12a, 12b et par conséquent aucune création de son. De même, il ne faut pas mettre les chambres 12a, 12b en dépression à l'état initial dudit objet musical 10, car un volume d'air total trop faible empêchera tout déplacement d'air entre les deux chambres et toute création de son.

La paroi intérieure 15 comporte en outre un orifice traversant 16 pour recevoir et maintenir en position ledit insert musical 20 qui doit assurer lors de son montage la fermeture hermétique dudit orifice traversant 16, de telle sorte que le flux d'air F transite d'une chambre à l'autre exclusivement au travers de l'insert musical 20 pour lui garantir un fonctionnement optimal. Cet orifice traversant 16 est dans l'exemple représenté positionné au centre de la paroi intérieure 15 permettant de centrer l'insert musical 20 par rapport audit corps 11, sans que cette position ne soit obligatoire. Bien entendu, la position de la paroi intérieure 15, le nombre de parois intérieures 15, la position de l'insert musical 20 et le nombre d'inserts musicaux 20 peuvent varier en fonction de la dimension, de la forme et de la destination de l'objet musical 10. Il est tout à fait envisageable de juxtaposer plusieurs objets musicaux 10, chacun pourvu d'un insert musical 20 différent, dans un dispositif unique pour créer plusieurs tonalités de son en fonction de la zone sollicitée. La paroi intérieure 15 peut être réalisée dans une matière identique ou au moins chimiquement compatible avec la matière dudit corps 11. Elle peut être fabriquée séparément pour être ensuite insérée dans le moule de fabrication dudit corps 11 et ne former qu'une seule pièce avec ledit corps 11 après moulage. Bien entendu, si le corps 11 de l'objet musical 10 est fabriqué en deux ou plusieurs pièces assemblées le long d'un ou de plusieurs plans de joint, la paroi intérieure 15 peut être intégrée dans un plan joint entre deux pièces.

L'insert musical 20 est conçu pour être logé à l'intérieur de la cavité intérieure 12 du corps 11 et solidarisé à la paroi intérieure 15 dudit objet sans communiquer avec l'environnement extérieur. La cavité intérieure 12 dudit corps 11 est par conséquent fermée de manière étanche, et contient un volume d'air défini et constant. Ce volume d'air reste propre et est exempt de contaminant car il n'est jamais en contact avec l'environnement extérieur lors de l'utilisation de l'objet musical 10. Par voie de conséquence, l'insert musical 20 reste propre également car il est confiné dans un volume hermétiquement fermé, il n'est donc jamais pollué par des contaminants, ni encrassé par des poussières, et son fonctionnement n'est jamais altéré. La conséquence de cette conception est un objet musical 10 offrant une excellente sécurité pour l'utilisateur, puisque l'élément musical 20 n'est jamais accessible, même accidentellement.

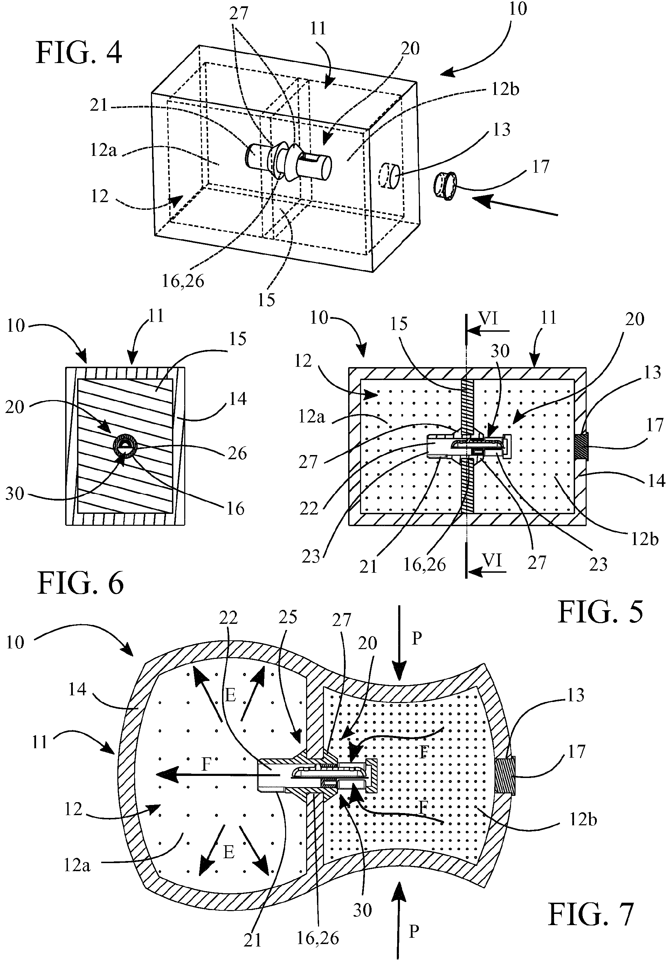

L'insert musical 20 est agencé pour émettre un son lorsqu'il est traversé par un flux d'air F obtenu dès que le corps 11 dudit objet musical 10 est déformé par pression mécanique au droit d'une des chambres 12a, 12b et que le volume d'air contenu dans cette chambre 12a, 12b d'un côté de la paroi intérieure 15 est chassé vers l'autre chambre 12b, 12a de l'autre côté de la paroi intérieure 15 en passant par l'insert musical 20 (fig. 7). Dans ce but, le corps 11 est avantageusement réalisé en matériau souple et élastique, conférant audit objet musical 10 une grande souplesse, lui permettant d'être facilement déformé par compression et expansion générant le déplacement d'un flux d'air F d'une chambre 12a, 12b à l'autre uniquement au travers dudit insert musical 20, tout en ayant la faculté de revenir rapidement et automatiquement dans sa forme initiale dès qu'il n'est plus sollicité. L'insert musical 20 permet en général de créer un son dans les deux sens de déplacement dudit flux d'air F.

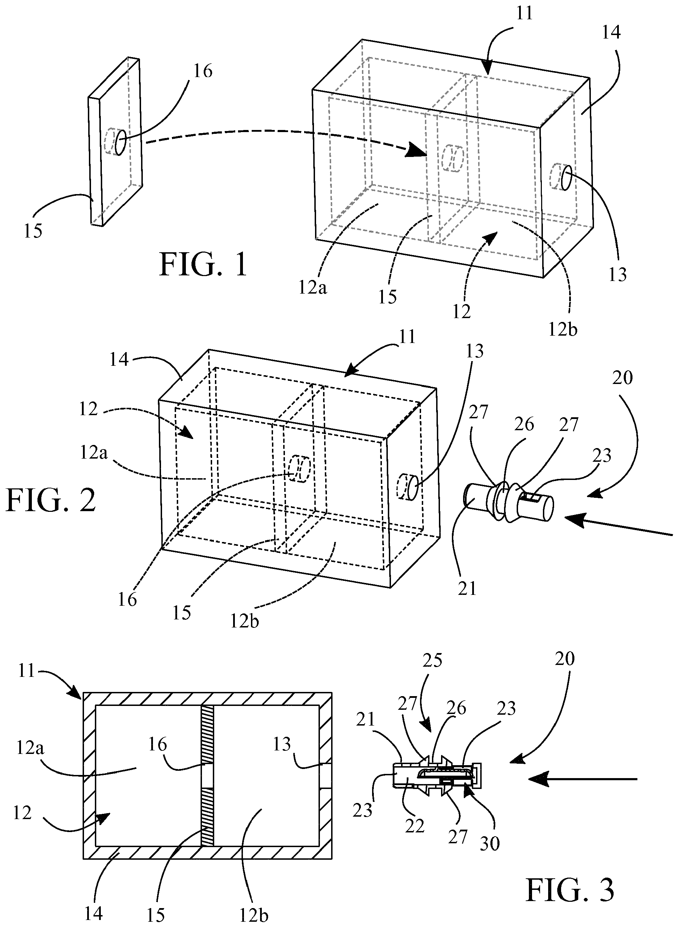

L'insert musical 20, illustré à partir de la figure 2, peut être constitué par tout type d'insert musical existant dans le commerce, ou peut être conçu spécialement pour la présente invention. Il comporte une gaine à musique 21 creuse formant un conduit d'air 22 ouvert à ses deux extrémités par un orifice 23 permettant la circulation d'un flux d'air F traversant la gaine de part en part. Un élément musical 30 est monté à l'intérieur du conduit d'air 22 pour être traversé par ledit flux d'air F et émettre un son lorsque le corps 11 dudit objet musical 10 est déformé et comprimé au droit d'une des chambres 12a, 12b. Bien entendu, l'élément musical 30 et la gaine à musique 21 peuvent ne former qu'une seule et même pièce, ou deux pièces séparées et assemblées entre-elles dans une position de montage verrouillée.

L'insert musical 20 comporte une zone de montage 25, qui peut être médiane ou non, permettant à la fois son emboitement axial dans l'orifice traversant 16 de la paroi intérieure 15, son verrouillage axial dans les deux sens par rapport à cette paroi et l'étanchéité dudit orifice traversant 16. Cette zone de montage 25 comporte à cet effet une gorge 26 apte à recevoir l'épaisseur de ladite paroi intérieure 15, et deux lèvres 27 disposées de part et d'autre de ladite gorge 26 pour d'une part verrouiller la position axiale dans les deux sens de l'insert musical 20 par rapport à la paroi intérieure 15, et d'autre part assurer l'étanchéité à l'air de cet assemblage. Dans l'exemple représenté, la gaine à musique 21 est cylindrique et la zone de montage 25 est annulaire. Ainsi, le diamètre intérieur de la gorge 26 doit être sensiblement égal, voire légèrement supérieur au diamètre de l'orifice traversant 16 pour assurer un montage serré. De même, la largeur de la gorge 26 doit être sensiblement égale voire légèrement inférieure à l'épaisseur de la paroi intérieure 15 pour plaquer sous pression les lèvres 27 contre les deux faces opposées de ladite paroi. En outre, le diamètre extérieur des lèvres 27 doit être supérieur au diamètre de l'orifice traversant 16 pour contribuer à l'étanchéité à l'air de cet assemblage. Bien entendu, tout autre moyen technique équivalent peut convenir. De même, la forme cylindrique de la gaine à musique 21 et la forme annulaire de la zone de montage 25 ne sont pas limitatives et peuvent être différentes tout en assurant les fonctions prévues.

L'élément musical 30 contenu dans l'insert musical 20 appartient aux petits instruments à vent. Dans l'exemple illustré, il est constitué d'un sifflet à double entrée, dans lequel le son est créé par la vibration d'une anche au passage du flux d'air F circulant dans les deux directions opposées selon que l'on comprime l'une ou l'autre chambre 12a, 12b. Il fait partie des éléments connus et ne sera pas décrit plus en détail. Il peut être réalisé en bois, en roseau, en métal, en matière synthétique telle qu'une matière thermoplastique, en matière composite, ou en une combinaison d'au moins deux de ces matières. Bien entendu, toute autre forme et/ou conception d'élément musical peut convenir.

### Possibilités d'application industrielle :

Le procédé de fabrication de l'objet musical 10 selon l'invention comporte une opération de moulage du corps 11 de l'objet dans un moule de fabrication creux (non représenté), dont la surface intérieure correspondant à l'empreinte tridimensionnelle dudit objet. On peut choisir une technique de rotomoulage ou moulage par rotation du moule de fabrication, qui permet de fabriquer des pièces creuses en une seule partie, sans plan de joint, par mise en forme d'une matière plastique en fusion contre la paroi intérieure d'un moule de fabrication creux. On peut également utiliser une technique d'injection en deux pièces avec une étape de collage des deux pièces sur une presse suivant un plan de joint. On peut encore utiliser une technique de soufflage, si la matière plastique utilisée s'y prête. Dans la présente invention, on peut utiliser comme matières plastiques principales un élastomère tel qu'un caoutchouc naturel ou synthétique, sans que cet exemple ne soit limitatif. Le moule de fabrication est généralement réalisé en deux parties, sans que cet exemple ne soit limitatif, et est équipé d'un évent ou plus, assurant l'équilibre de la pression à l'intérieur du moule. On charge une dose de matières plastiques dans le moule avant sa fermeture, définie en fonction de l'épaisseur de la paroi 14 dudit objet à fabriquer. La phase de moulage comporte une étape de chauffe et une étape de refroidissement. L'évent permet d'évacuer les gaz contenus dans le moule à l'extérieur du moule lors de l'étape de chauffe, puis à l'air de rentrer dans le moule lors de l'étape de refroidissement évitant ainsi à la pièce d'être en dépression.

Préalablement à l'étape de moulage du corps 11 dudit objet, on ajoute à l'intérieur du moule, par exemple entre les deux parties du moule, la paroi intérieure 15 qui a été fabriquée séparément. On peut dans ce cas prévoir que l'évent prévu dans le moule se prolonge jusqu'à l'intérieur de l'orifice traversant 16 de la paroi intérieure 15 pour éviter que cet orifice ne se bouche par la matière plastique en fusion. Ainsi, à l'issue de la phase de moulage, et après ouverture du moule, on obtient le corps 11 dudit objet, selon la figure 1, intégrant la paroi intérieure 15 dont le pourtour est lié intimement à la paroi extérieure 14 du corps 11 par fusion entre les deux matières lors de l'opération de moulage. C'est la raison pour laquelle la paroi intérieure 15 et le corps 11 dudit objet sont réalisés dans une matière élastomère similaire, identique ou compatible.

Après la phase de maturation ou séchage complet dudit corps 11, on introduit l'insert musical 20 à l'intérieur du corps 11 par le trou d'évent 13 laissé dans la paroi extérieure 14 dudit corps 11 par l'évent du moule de fabrication, comme le montrent les figures 2 et 3. La matière formant le corps 11 étant souple et élastique, l'insert musical 20 peut traverser le trou d'évent 13 qui s'écarte au passage de la gaine à musique 21 et des lèvres 27. On accompagne l'insert musical 20 à l'intérieur du corps 11 pour l'emboiter dans la paroi intérieure 15 au travers de l'orifice traversant 16. La matière formant la paroi intérieure 15 et/ou la gaine à musique 21 permet la déformation de l'orifice traversant 16 et/ou des lèvres 27 au passage de la gaine à musique 21 et d'une des lèvres 27. Après montage de l'insert musical 20 dans le corps 11, comme le montre la figure 4, on introduit un bouchon 17 dans le trou d'évent 13 pour l'obturer de manière étanche à l'air. Dans l'exemple illustré, ce bouchon 17 est épaulé et solidarisé à la paroi 14 par collage ou tout autre procédé équivalent permettant une fermeture hermétique de la cavité intérieure 12. De même, tout autre type de bouchon permettant de remplir la même fonction peut convenir, tel qu'un joint en matière élastomère ou en latex créé par accumulation de matière dans le trou d'évent 13, une pastille en matière élastomère superposée au trou d'évent 13 et scellée avec du latex, etc. Par conséquent, le terme « bouchon » ne doit pas être interprété dans un sens restrictif.

L'objet musical 10 obtenu par le procédé de fabrication selon l'invention est illustré dans les figures 5 à 7. Il constitue un objet totalement hermétique à l'air, contenant dans sa cavité intérieure 12 un volume d'air déterminé et constant (symbolisé à la figure 5 par une densité de points égale entre les deux chambres). Ce volume d'air peut être à la pression atmosphérique ou à une pression légèrement supérieure ou inférieure à la pression atmosphérique déterminée de manière empirique en fonction de l'élasticité de la matière constituant ledit corps 11 et de la forme tridimensionnelle dudit corps 11. Dans l'exemple illustré, ce volume d'air est divisé en deux parts sensiblement égales dans les deux chambres 12a, 12b séparées entre-elles de manière étanche par la paroi intérieure 15, au travers de laquelle est positionné ledit insert musical 20. Comme précisé plus haut, les deux chambres 12a, 12b peuvent ne pas avoir le même volume. La position équilibrée de l'objet musical 10 est représentée à la figure 5, position dans laquelle l'objet n'émet aucun son. Cette position équilibrée correspond à l'état initial dudit objet musical 10, c'est-à-dire lorsqu'il ne subit aucune sollicitation mécanique. Pour créer un son, il est nécessaire d'exercer une pression mécanique sur le corps 11 dudit objet musical 10 au droit d'une des chambres 12b, représentée par les flèches P à la figure 7, qui va chasser une partie du volume d'air de cette chambre 12b dans l'autre chambre 12a, afin de créer un flux d'air F dans un sens au travers de l'insert musical 20 générant un son. Le volume d'air chassé d'une des chambres 12b va mettre cette chambre 12b en dépression (symbolisée par une densité de points supérieure à la densité de la position d'équilibre de la figure 5) et l'autre chambre 12a en surpression (symbolisée par une densité de points inférieure à la densité de la position d'équilibre de la figure 5), augmentant d'autant le volume d'air et en provoquant l'expansion du corps 11 au droit de cette autre chambre 12a représentée par les flèches E. Cette position déséquilibrée est illustrée à la figure 7. Inversement, une pression mécanique (non représentée) exercée sur le corps 11 au droit de l'autre chambre 12a chasse une partie du volume d'air de cette chambre 12a dans l'autre chambre 12b, créant un flux d'air F dans l'autre sens au travers de l'insert musical 20 générant également un son. L'arrêt des sollicitations par compression de l'objet musical 10 entraîne un rééquilibrage automatique des pressions entre les deux chambres 12a, 12b via l'insert musical 20 qui peut ou non généré un son selon sa sensibilité. L'objet musical 10 revient automatiquement dans sa position équilibrée ou dans son état initial (fig. 5) et n'émet plus de son.

Il apparait clairement de ce qui précède que l'invention permet d'atteindre les buts fixée. Notamment, cet objet musical 10 peut émettre des sons sans être en communication avec l'environnement extérieur, par un simple transfert d'air entre deux chambres 12a, 12b hermétiquement fermées via un insert musical 20. De ce fait, cet objet musical 10 est dit « propre » étant donné que son volume intérieur et son insert musical 20 sont protégés de l'utilisateur et de l'environnement extérieur par son corps 11 fermé de manière hermétique, évitant tout risque de contamination. Il peut en outre être facilement lavé, nettoyé, désinfecté pour éviter là encore tout risque de contamination par le toucher. Cet objet musical 10 peut être décliné dans tout type d'applications aussi bien dans le domaine des secours comme alerte sonore, dans le domaine du sport comme moyen d'arbitrage, dans le domaine du loisir comme instrument de musique, dans le domaine ludique comme jouet couineur ou siffleur pour enfants et animaux domestiques, etc. Sa conception particulière fait de cet objet musical 10 un dispositif totalement sécurisé pour l'usager puisque l'insert musical 20 n'est pas accessible, même accidentellement.

La présente invention n'est pas limitée à l'exemple de réalisation décrit mais s'étend à toute modification et variante évidentes pour un homme du métier dans le cadre du champ de protection tel que défini par les revendications suivantes.

## Revendications

1. Procédé de fabrication d'un objet musical (10), ledit objet musical comportant un corps (11) creux et compressible, réalisé en un matériau souple et élastique, délimitant une cavité intérieure (12), une paroi intérieure (15) disposée à l'intérieur dudit corps (11) pour diviser ladite cavité intérieure (12) en deux chambres (12a, 12b), et un insert musical (20) monté au travers de ladite paroi intérieure (15) pour mettre en communication lesdites chambres (12a, 12b) et agencé pour émettre un son lorsqu'il est traversé par un flux d'air (F), ledit flux d'air étant généré par une pression mécanique exercée sur ledit corps (11) au droit d'une des chambres, procédé dans lequel l'on réalise le corps (11) dudit objet musical (10) selon une technique de moulage en matière élastomère mise en forme dans un moule de fabrication creux pourvu d'un évent, le volume intérieur dudit moule correspondant à l'empreinte tridimensionnelle dudit corps (11), **caractérisé en ce que** l'on fabrique séparément ladite paroi intérieure (15) pourvue d'un orifice traversant (16) agencé pour recevoir et maintenir en position ledit insert musical (20), **en ce que**, préalablement à l'étape de moulage dudit corps (11), l'on ajoute dans ledit moule de fabrication ladite paroi intérieure (15) de telle manière que son pourtour soit surmoulé par ledit corps (11) lors de l'étape de moulage, **en ce que**, après l'opération de moulage dudit corps (11), l'on introduit ledit insert musical (20) dans ledit corps (11) par le trou d'évent (13) laissé dans la paroi extérieure (14) dudit corps (11) par l'évent dudit moule de fabrication, pour l'emboiter dans la paroi intérieure (15) au travers dudit orifice traversant (16) et simultanément fermer hermétiquement ledit orifice traversant, et **en ce que**, après montage de l'insert musical (20) dans ledit corps (11), on ferme ledit trou d'évent (13) par un bouchon (17) pour l'obturer de manière étanche et fermer de manière hermétique ladite cavité intérieure (12) de sorte que ledit insert musical (20) est disposé à l'intérieur dudit corps (11), entre les deux chambres (12a, 12b) afin de ne communiquer qu'avec elles, sans aucune communication avec l'environnement extérieur dudit objet musical (10).

2. Procédé de fabrication selon la revendication 1, **caractérisé en ce que** l'on remplit ladite cavité intérieure (12) d'un volume d'air total déterminé et constant en tenant compte de l'élasticité dudit matériau constituant ledit corps (11) et de la forme tridimensionnelle dudit corps (11) pour autoriser un déplacement d'air entre les deux chambres (12a, 12b) lorsqu'une pression mécanique est exercée sur ledit corps (11) au droit d'une des chambres et ainsi autoriser la création d'un son à chaque sollicitation mécanique dudit objet.

3. Procédé de fabrication selon la revendication 1, **caractérisé en ce que** l'on utilise pour la paroi intérieure (15) et le corps (11) dudit objet musical (10) une matière élastomère similaire, identique ou compatible, permettant une fusion entre les deux matières lors de l'opération de moulage.

4. Procédé de fabrication selon la revendication 3, **caractérisé en ce que** l'on choisit ladite matière élastomère parmi les caoutchoucs naturels, les caoutchoucs synthétiques, les thermoplastiques élastomères.

5. Procédé de fabrication selon la revendication 1, **caractérisé en ce que** ladite technique de moulage est une technique de rotomoulage.

6. Procédé de fabrication selon la revendication 1, **caractérisé en ce que** l'on prévoit sur ledit insert musical (20) une zone de montage (25) complémentaire à l'orifice traversant (16) prévu dans ladite paroi intérieure (15) et agencée pour fermer hermétiquement ledit orifice traversant (16).

7. Procédé de fabrication selon la revendication 6, **caractérisé en ce que** l'on réalise ladite zone de montage (25) sous la forme d'une gorge (26) agencée pour recevoir ledit orifice traversant (16), et de deux lèvres (27) disposées de part et d'autre de ladite gorge (26) et agencées pour se plaquer sur les faces opposées de ladite paroi intérieure (15), maintenir ledit insert musical (20) en position de montage par rapport à ladite paroi intérieure (15) et fermer hermétiquement ledit orifice traversant (16).

8. Objet musical (10) obtenu par le procédé de fabrication selon l'une quelconque des revendications précédentes, ledit objet musical comportant un corps (11) creux et compressible, réalisé en un matériau souple et élastique, délimitant une cavité intérieure (12), une paroi intérieure (15) disposée à l'intérieur dudit corps (11) pour diviser ladite cavité intérieure (12) en deux chambres (12a, 12b), et un insert musical (20) monté au travers de ladite paroi intérieure (15) pour mettre en communication lesdites chambres (12a, 12b) et agencé pour émettre un son lorsqu'il est traversé par un flux d'air (F), ledit flux d'air étant généré par une pression mécanique exercée sur ledit corps (11) au droit d'une des chambres, **caractérisé en ce que** ladite paroi intérieure (15) a son pourtour surmoulé par ledit corps (11) et comporte un orifice traversant (16) agencé pour recevoir et maintenir en position ledit insert musical (20), **en ce que** ledit insert musical (20) est agencé pour fermer hermétiquement ledit orifice traversant (16), et **en ce que** ledit corps (11) comporte un trou d'évent (13) fermé hermétiquement par un bouchon (17) de sorte que ledit insert musical (20) est disposé à l'intérieur dudit corps (11), entre les deux chambres (12a, 12b) afin de ne communiquer qu'avec elles, sans aucune communication avec l'environnement extérieur dudit objet musical (10).

9. Objet musical selon la revendication 8, **caractérisé en ce que** ladite cavité intérieure (12) est remplie d'un volume d'air total déterminé et constant en tenant compte de l'élasticité dudit matériau constituant ledit corps (11) et de la forme tridimensionnelle dudit corps (11) pour autoriser un déplacement d'air entre les deux chambres (12a, 12b) lorsqu'une pression mécanique est exercée sur ledit corps (11) au droit d'une des chambres et ainsi autoriser la création d'un son à chaque sollicitation mécanique dudit objet.

10. Objet musical selon la revendication 8, **caractérisé en ce que** ledit insert musical (20) comporte une zone de montage (25) complémentaire à l'orifice traversant (16) prévu dans ladite paroi intérieure (15) et agencée pour fermer hermétiquement ledit orifice.

11. Objet musical selon la revendication 10, **caractérisé en ce que** ladite zone de montage (25) comporte une gorge (26) agencée pour recevoir ledit orifice traversant (16), et deux lèvres (27) disposées de part et d'autre de ladite gorge (26) et agencées pour se plaquer sur les faces opposées de ladite paroi intérieure (15), maintenir ledit insert musical (20) en position de montage par rapport à ladite paroi intérieure (15) et fermer hermétiquement ledit orifice traversant (16).

## Patentansprüche

1. Verfahren zur Herstellung eines Musikinstrumentes (10), dieses Musikinstrument umfasst einen hohlen und komprimierbaren Körper (11), ausgeführt aus einem flexiblen und elastischen Material, der einen Innenraum (12) umschließt, eine Innenwand (15), angeordnet im Inneren dieses Körpers (11) zur Unterteilung dieses Innenraums (12) in zwei Kammern (12a, 12b), und einen musikalischen Einsatz (20), montiert durch diese Innenwand (15) hindurch, damit diese Kammern (12a, 12b) kommunizieren und dazu vorgesehen, einen Ton abzugeben, wenn ein Luftstrom (F) hindurchfließt, dieser Luftstrom wird dabei durch einen mechanischen Druck erzeugt, der auf diesen Körper (11) über eine dieser Kammern ausgeübt wird, ein Verfahren, bei dem der Körper (11) dieses Musikinstrumentes (10) nach einer Gießtechnik aus Elastomermaterial hergestellt wird, das in einer hohlen Herstellungsform, mit einer Öffnung hergestellt wird, der Innenraum dieser Form entspricht dem dreidimensionalen Abdruck dieses Körpers (11), ***dadurch gekennzeichnet, dass*** die erwähnte Innenwand (15) getrennt hergestellt wird, sie ist versehen mit einer durchführenden Öffnung (16), vorgesehen zur Aufnahme und zum in Position Halten des erwähnten musikalischen Einsatzes (20), dadurch dass vor dem Schritt des Gießens dieses Körpers (11), in diese Gießform diese Innenwand (15) eingesetzt wird, so dass ihr Umfang von diesem Körper (11) im Schritt des Gießens überformt wird und dass nach dem Vorgang des Gießens dieses Körpers (11), der erwähnte musikalische Einsatz (20) in diesen Körper (11) durch das Öffnungsloch (13) eingeführt wird, das in der Außenwand (14) dieses Körpers (11) ausgespart wurde, durch die Öffnung dieser Herstellungsform, um ihn in die Innenwand (15) durch die durchführende Öffnung (16) hindurch einzusetzen und gleichzeitig diese durchführende Öffnung hermetisch zu verschließen, und dadurch dass, nach der Montage des musikalischen Einsatzes (20) in diesem Körper (11), das erwähnte Öffnungsloch (13) mit einem Stopfen (17) geschlossen wird, so dass es dicht verschlossen ist und der erwähnte Innenraum (12) hermetisch geschlossen ist, so dass der erwähnte musikalische Einsatz (20) im Inneren dieses Körpers (11) angeordnet ist zwischen den beiden Kammern (12a, 12b), um so nur mit diesen zu kommunizieren, ohne irgendeine Kommunikation mit der äußeren Umgebung dieses Musikinstrumentes (10).

2. Herstellungsverfahren nach Anspruch 1, ***dadurch gekennzeichnet, dass*** der erwähnte Innenraum (12) mit einem bestimmten und konstanten Luftvolumen gefüllt wird, unter Berücksichtigung der Elastizität des Materials, das diesen Körper (11) bildet und der dreidimensionalen Form dieses Körpers (11), um eine Verlagerung der Luft zwischen den beiden Kammern (12a, 12b) zu erlauben, wenn ein mechanischer Druck auf diesen Körper (11) über eine dieser Kammern ausgeübt wird und so die Schaffung eines Tons bei jeder mechanischen Beanspruchung dieses Objektes zu erlauben.

3. Herstellungsverfahren nach Anspruch 1, ***dadurch gekennzeichnet, dass*** für die Innenwand (15) und den Körper (11) dieses Musikinstrumentes (10) ein ähnliches elastomeres Material verwendet wird, identisch oder kompatibel, das eine Fusion zwischen den beiden Materialien beim Gießvorgang erlaubt.

4. Herstellungsverfahren nach Anspruch 3, ***dadurch gekennzeichnet, dass*** dieses elastomere Material ausgewählt wird aus natürlichen Kautschuksorten, synthetischen Kautschuksorten und thermoplastischen Elastomeren.

5. Herstellungsverfahren nach Anspruch 1, ***dadurch gekennzeichnet, dass*** diese Gießtechnik eine Rotationsformung ist.

6. Herstellungsverfahren nach Anspruch 1, ***dadurch gekennzeichnet, dass*** an dem erwähnten musikalischen Einsatz (20) eine Montagezone (25) vorgesehen ist, die zu der durchführenden Öffnung (16), die in der erwähnten Innenwand (15) vorgesehen ist komplementär und so ausgelegt ist, dass sie die erwähnte durchführende Öffnung (16) hermetisch verschließt.

7. Herstellungsverfahren nach Anspruch 6, ***dadurch gekennzeichnet, dass*** diese Montagezone (25) in Form einer Nut (26) ausgeführt wird, ausgelegt zur Aufnahme der durchführenden Öffnung (16), und der beiden Lippen (27) die beiderseits dieser Nut (26) angeordnet sind und dazu dienen, sich gegen die beiden gegenüberliegenden Seiten dieser Innenwand (15) zu pressen und diesen musikalischen Einsatzes (20) bezogen auf diese Innenwand (15) in der Montageposition zu halten und diese durchführende Öffnung (16) hermetisch zu verschließen.

8. Musikinstrument (10), erhalten durch das Herstellungsverfahren nach irgendeinem der vorangehenden Ansprüche, dieses Musikinstrument umfasst einen hohlen und komprimierbaren Körper (11), ausgeführt aus einem flexiblen und elastischen Material, der einen Innenraum (12) umschließt, eine Innenwand (15), angeordnet im Inneren dieses Körpers (11), zur Unterteilung dieses Innenraums (12) in zwei Kammern (12a, 12b), und einen musikalischen Einsatz (20), montiert durch diese Innenwand (15) hindurch, damit diese Kammern (12a, 12b) kommunizieren können und dazu vorgesehen, einen Ton abzugeben, wenn ein Luftstrom (F) hindurchfließt, dieser Luftstrom wird durch einen mechanischen Druck erzeugt, der auf diesen Körper (11) über eine dieser Kammern ausgeübt wird ***dadurch gekennzeichnet, dass*** der Umfang der erwähnten Innenwand (15) von diesem Körper (11) überformt wird und eine durchführende Öffnung (16) enthält, vorgesehen zur Aufnahme des erwähnten musikalischen Einsatzes (20) und ihn in Position zu halten, dadurch, dass der erwähnte musikalische Einsatz (20) dazu ausgelegt ist, diese durchführende Öffnung (16) hermetisch zu verschließen und dass der erwähnte Körper (11) ein Öffnungsloch (13) enthält, das hermetisch durch einen Stopfen (17) verschlossen ist, so dass dieser musikalische Einsatz (20) im Inneren dieses Körpers (11), zwischen den beiden Kammern (12a, 12b) angeordnet ist, um nur mit diesen zu kommunizieren, ohne irgendeine Kommunikation mit der Außenumgebung dieses Musikinstrumentes (10).

9. Musikinstrument nach Anspruch 8, ***dadurch gekennzeichnet, dass*** der erwähnte Innenraum (12) mit einem bestimmten und konstanten Luftvolumen gefüllt wird, unter Berücksichtigung der Elastizität des Materials, das diesen Körper (11) bildet und der dreidimensionalen Form dieses Körpers (11), um eine Verlagerung der Luft zwischen den beiden Kammern (12a, 12b) zu erlauben, wenn ein mechanischer Druck auf diesen Körper (11) über eine dieser Kammern ausgeübt wird und so die Schaffung eines Tons bei jeder mechanischen Beanspruchung dieses Objektes zu erlauben.

10. Musikinstrument nach Anspruch 8, **dadurch gekennzeichnet, dass** der erwähnte musikalische Einsatz (20) eine Montagezone (25) enthält, die zu der durchführenden Öffnung (16), die in der erwähnten Innenwand (15) vorgesehen ist komplementär und so ausgelegt ist, dass sie die erwähnte durchführende Öffnung hermetisch verschließt.

11. Musikinstrument nach Anspruch 10, **dadurch gekennzeichnet, dass** diese Montagezone (25) in Form einer Nut (26) ausgeführt wird, ausgelegt zur Aufnahme der durchführenden Öffnung (16) und der beiden Lippen (27), die beiderseits dieser Nut (26) angeordnet sind und dazu dienen, sich gegen die beiden gegenüberliegenden Seiten dieser Innenwand (15) zu pressen und diesen musikalischen Einsatzes (20) bezogen auf diese Innenwand (15) in der Montageposition zu halten und diese durchführende Öffnung (16) hermetisch zu verschließen.

## Claims

1. Method for producing a musical instrument (10), said musical instrument comprising a hollow and compressible body (11) made of a flexible and elastic material, delimiting an internal cavity (12), an internal wall (15) arranged inside said body (11) in order to divide said internal cavity (12) into two chambers (12a, 12b), and a musical insert (20) mounted through said internal wall (15) in order to place said chambers (12a, 12b) in communication with one another and designed to emit a sound when passed through by an air flow (F), said air flow being generated by a mechanical pressure exerted on said body (11) at the level of one of the chambers, in which method the body (11) of said musical instrument (10) is made, using a moulding technique, from an elastomer material shaped in a hollow production mould provided with a vent, the internal volume of said mould corresponding to the three-dimensional impression of said body (11), **characterised in that** said internal wall (15) provided with a through-orifice (16) designed to receive and hold said musical insert (20) in position is produced separately, **in that**, prior to the step of moulding said body (11), said internal wall (15) is added into said production mould such that the periphery thereof is overmoulded by said body (11) during the moulding step, **in that**, after the moulding operation for said body (11), said musical insert (20) is inserted into said body (11) via the vent hole (13) left in the external wall (14) of said body (11) by the vent of said production mould, in order to interlock same in the internal wall (15) through said through-orifice (16) and simultaneously hermetically seal said through-orifice, and **in that**, after mounting the musical insert (20) inside said body (11), said vent hole (13) is closed by a plug (17) in order to sealingly plug and hermetically seal said internal cavity (12), such that said musical insert (20) is arranged inside said body (11), between the two chambers (12a, 12b) so as to communicate solely therewith, without any communication with the environment external to said musical instrument (10).

2. Production method according to claim 1, **characterised in that** said internal cavity (12) is filled with a determined and constant total air volume taking into account the elasticity of said material forming said body (11) and the three-dimensional shape of said body (11) in order to allow air to be displaced between the two chambers (12a, 12b) when a mechanical pressure is exerted on said body (11) at the level of one of the chambers and thus allow a sound to be created each time said instrument is mechanically stressed.

3. Production method according to claim 1, **characterised in that** the internal wall (15) and the body (11) of said musical instrument (10) are made of a similar, identical, or compatible elastomer material, allowing the two materials to fuse during the moulding operation.

4. Production method according to claim 3, **characterised in that** said elastomer material is chosen from natural rubbers, synthetic rubbers, and thermoplastic elastomers.

5. Production method according to claim 1, **characterised in that** said moulding technique is a rotational moulding technique.

6. Production method according to claim 1, **characterised in that** a mounting area (25) complementary to the through-orifice (16) provided in said internal wall (15) is provided on said musical insert (20) and designed to hermetically seal said through-orifice (16).

7. Production method according to claim 6, **characterised in that** said mounting area (25) is produced in the form of a groove (26) designed to receive said through-orifice (16), and two lips (27) arranged on either side of said groove (26) and designed to be pressed against the opposite faces of said internal wall (15), to hold said musical insert (20) in the mounting position relative to said internal wall (15) and to hermetically seal said through-orifice (16).

8. Musical instrument (10) obtained by the production method according to any of the preceding claims, said musical instrument comprising a hollow and compressible body (11) made of a flexible and elastic material, delimiting an internal cavity (12), an internal wall (15) arranged inside said body (11) in order to divide said internal cavity (12) into two chambers (12a, 12b), and a musical insert (20) mounted through said internal wall (15) in order to place said chambers (12a, 12b) in communication with one another and designed to emit a sound when passed through by an air flow (F), said air flow being generated by a mechanical pressure exerted on said body (11) at the level of one of the chambers, **characterised in that** said internal wall (15) has its periphery overmoulded by said body (11) and comprises a through-orifice (16) designed to receive and hold said musical insert (20) in position, **in that** said musical insert (20) is designed to hermetically seal said through-orifice (16), and **in that** said body (11) comprises a vent hole (13) that is hermetically sealed by a plug (17) such that said musical insert (20) is arranged inside said body (11), between the two chambers (12a, 12b) so as to communicate solely therewith, without any communication with the environment external to said musical instrument (10).

9. Musical instrument according to claim 8, **characterised in that** said internal cavity (12) is filled with a determined and constant total air volume taking into account the elasticity of said material forming said body (11) and the three-dimensional shape of said body (11) in order to allow air to be displaced between the two chambers (12a, 12b) when a mechanical pressure is exerted on said body (11) at the level of one of the chambers and thus allow a sound to be created each time said instrument is mechanically stressed.

10. Musical instrument according to claim 8, **characterised in that** said musical insert (20) comprises a mounting area (25) complementary to the through-orifice (16) provided in said internal wall (15) and designed to hermetically seal said orifice.

11. Musical instrument according to claim 10, **characterised in that** said mounting area (25) comprises a groove (26) designed to receive said through-orifice (16), and two lips (27) arranged on either side of said groove (26) and designed to be pressed against the opposite faces of said internal wall (15), to hold said musical insert (20) in the mounting position relative to said internal wall (15) and to hermetically seal said through-orifice (16).
